(19) **Europäisches Patentamt / European Patent Office / Office européen des brevets**

(11) **EP 1 456 144 B1**

(12) **FASCICULE DE BREVET EUROPEEN**

(45) Date de publication et mention
de la délivrance du brevet:
**06.11.2013 Bulletin 2013/45**

(21) Numéro de dépôt: **02796909.6**

(22) Date de dépôt: **11.12.2002**

(51) Int Cl.:
*C03C 4/02* *(2006.01)*     *C03C 3/087* *(2006.01)*
*C03C 1/10* *(2006.01)*

(86) Numéro de dépôt international:
**PCT/FR2002/004282**

(87) Numéro de publication internationale:
**WO 2003/053874 (03.07.2003 Gazette 2003/27)**

(54) **COMPOSITION DE VERRE BLEU DESTINEE A LA FABRICATION DE VITRAGES**

BLAUGLASZUSAMMENSETZUNG FÜR DIE HERSTELLUNG VON GLASSCHEIBEN

BLUE GLASS COMPOSITION FOR MAKING GLASS PANES

(84) Etats contractants désignés:
**AT BE BG CH CY CZ DE DK EE ES FI FR GB GR
IE IT LI LU MC NL PT SE SI SK TR**

(30) Priorité: **19.12.2001 FR 0116455**

(43) Date de publication de la demande:
**15.09.2004 Bulletin 2004/38**

(73) Titulaire: **SAINT-GOBAIN GLASS FRANCE
92400 Courbevoie (FR)**

(72) Inventeurs:
• **TEYSSEDRE, Laurent
F-75013 Paris (FR)**

• **SACHOT, Dominique
F-77330 Ozoir-la-Ferrière (FR)**
• **JEANVOINE, Pierre
F-78300 Poissy (FR)**

(74) Mandataire: **Muller, René et al
SAINT-GOBAIN RECHERCHE
39, quai Lucien Lefranc
93303 Aubervilliers (FR)**

(56) Documents cités:
**WO-A-02/07249     US-A- 5 688 727
US-B1- 6 313 053**

**Description**

L'invention se rapporte à une composition de verre de type silico-sodo-calcique colorée en bleu. Plus particulièrement, l'invention concerne une composition de verre bleu pour la réalisation de verres plats par flottage sur un bain de métal fondu tel que l'étain (procédé "float"), ces verres plats étant destinés notamment, mais pas exclusivement, à former des pare-brise et des vitrages latéraux situés à l'avant d'un véhicule.

Les vitrages automobiles sont soumis à des exigences très strictes. En matière de propriétés optiques, ces exigences sont régies par voie de réglementation, par exemple lorsqu'il s'agit de la transmission lumineuse d'un pare-brise, ou bien par souci du confort de l'usager, notamment en ce qui concerne la transmission énergétique.

Outre les contraintes liées à la transmission lumineuse et à la transmission énergétique, les vitrages situés à l'avant des véhicules doivent encore répondre aux désirs des constructeurs automobiles pour ce qui est de la couleur, en particulier relativement à la longueur d'onde dominante et à la pureté.

Le fer est un agent colorant qui satisfait pleinement à ces exigences. La présence du fer sous forme d'ions ferreux $Fe^{2+}$, distincts des ions ferriques $Fe^{3+}$, permet de réduire la transmission des infrarouges au travers du verre, et donc d'abaisser la transmission énergétique. En outre, le fer apporte une coloration verte qui s'accorde bien avec la couleur de la plupart des automobiles.

Néanmoins, l'association d'une carrosserie bleutée et d'un vitrage vert s'avère dans bien des cas peu satisfaisante d'un point de vue esthétique. C'est pourquoi les constructeurs automobiles souhaitent disposer de verres présentant une couleur bleue relativement neutre, c'est-à-dire présentant une longueur d'onde pas trop faible et une pureté pas trop élevée, pour un niveau de  transmission lumineuse important et aussi une transmission énergétique modérée.

Pour obtenir une coloration bleue, on peut simplement ajouter de l'oxyde de cobalt dans la composition de verre. L'inconvénient majeur de cet oxyde est qu'il entraîne une réduction de la transmission lumineuse du verre, la transmission des infrarouges à travers le verre n'étant quant à elle que très faiblement affectée.

Une autre manière de colorer le verre en bleu consiste à utiliser le fer comme seul agent colorant, à condition toutefois de maintenir le facteur rédox (teneur en ions ferreux FeO/teneur totale en ions ferreux et en ions ferriques $Fe_2O_3$) à une valeur relativement élevée, de l'ordre de 50 %. Un facteur rédox aussi élevé pose des problèmes au niveau de la mise en oeuvre du procédé car la fusion du verre est rendue plus difficile ce qui augmente d'autant le risque de voir apparaître dans le verre des inclusions de matériel incomplètement fondu, tel que la silice. En outre, dans des conditions aussi réductrices, le fer est susceptible de réagir avec le sulfate utilisé pour l'affinage du verre dans le bain pour former du sulfure de fer qui donne au verre une coloration jaune à brune.

Des verres colorés en bleu peuvent encore être obtenus en associant plusieurs agents colorants.

Dans EP-A-0 820 964, un mélange associant du fer (0,4 à 1,1 %) et de l'oxyde de cobalt (10 à 75 ppm) est utilisé pour former un verre bleu ayant une longueur d'onde dominante variant de 480 à 490 nm et une pureté d'excitation d'au moins 6 %. La proportion de fer à l'état ferreux est comprise entre 20 et 40 %. L'effet de coloration lié essentiellement à la présence d'oxyde de cobalt dans le verre se traduit par une couleur bleue très soutenue.

Dans EP-A-0 814 064, il est proposé d'associer du fer (0,53 à 1,1 %), de l'oxyde de cobalt (5 à 40 ppm) et éventuellement de l'oxyde de chrome (jusqu'à 100 ppm) pour former des verres bleus présentant une longueur d'onde dominante variant de 485 à 491 nm et une pureté variant de 3 à 18 %. Le rédox est compris entre 0,25 et 0,35.

Dans EP-A-1 023 245, on utilise comme précédemment du fer (0,4 à 1,0 %), de l'oxyde de cobalt (4 à 40 ppm) et éventuellement de l'oxyde de chrome (jusqu'à 100 ppm) pour former un verre présentant une longueur d'onde dominante variant de 485 à 489 nm et une pureté d'excitation variant de 3 à 18 %. L'élaboration de ce verre est réalisée à un rédox compris entre 0,35 et 0,6 qui n'est pas une valeur  de rédox habituelle pour le procédé "float". Il est donc nécessaire dans ce cas d'utiliser des moyens de chauffage spécifiques pour fondre la composition, comme déjà précisé précédemment. Ceci se traduit aussi par une augmentation du coût du verre produit.

WO 02/070249, art antérieur selon l'Art. 54(3) CBE, décrit des verres bleus de type silico-sodo-calcique comprenant 0,5-0,6% de fer total exprimé sous forme de $Fe_2O_3$, 0-20 ppm CoO et 20-45 ppm $Cr_2O_3$ pour vitrages automobiles.

WO 01/74729 décrit des verres de type silico-sodo-calcique bleus à haute transmission comprenant moins de 0,4% de fer total exprimé sous forme de $Fe_2O_3$, un rédox d'au moins 30%, au moins 0,08% FeO, 0-500 ppm $Cr_2O_3$, 0-1000 ppm $V_2O_5$, 0-10 ppm Se et 0-100 ppm CoO.

Répondre rapidement à la demande du marché est un souci permanent des producteurs de verre en général, et plus particulièrement de verres colorés pour l'automobile où la gamme de couleur est relativement étendue. Les procédés d'obtention des verres bleus cités plus haut opèrent avec une teneur en fer total au moins égale à 0,4 % et/ou dans des conditions de rédox relativement élevé. Ils fonctionnent le plus souvent avec une composition de verre donnée et il n'est pas recommandé de modifier la nature ou la teneur des composants entrant dans la constitution du mélange vitrifiable. En effet, tout changement de la composition du verre dans le four nécessite un temps de transition pendant lequel le verre produit ne possède pas les propriétés optiques et la coloration attendues. Ce temps de transition est d'autant plus long que la teneur en agents colorants est élevée. Par ailleurs, limiter la teneur en fer, notamment en fer ferreux, apporte un avantage supplémentaire car le besoin en énergie pour fondre la composition de verre est moindre, ce qui contribue à réduire le coût du verre.

La présente invention se propose de fournir une composition de verre de type silico-sodo-calcique permettant de former un verre coloré en bleu qui remédie aux inconvénients précités. Plus précisément, la présente invention a pour but de proposer une composition susceptible d'être mise en oeuvre dans les conditions du procédé "float" pour former un verre présentant une coloration bleue et possédant des propriétés spectrales compatibles avec un usage en tant que vitrage automobile ou pour le bâtiment, ladite composition comprenant une teneur réduite en agents colorants, notamment en fer. La faible teneur en fer dans la composition selon l'invention permet de pouvoir élaborer le verre dans une installation "float" adaptée à la production de verre "clair" dans lequel la teneur en fer n'excède généralement pas 0,6 %. Ce type d'installation s'avère particulièrement avantageux économiquement pour les raisons explicitées plus haut.

Mieux encore, l'invention permet de fournir un verre bleu apte à former un vitrage automobile qui, pour une épaisseur variant de 3 à 5 mm, présente une transmission lumineuse $TL_A$ au moins égale à 60 % et une sélectivité au moins égale à 1,1.

Ces buts sont atteints selon la présente invention par la composition de verre bleu de type silico-sodo-calcique qui comprend les agents colorants ci-après dans une teneur variant dans les limites pondérales suivantes :

| | |
|---|---|
| $Fe_2O_3$ (fer total) | 0,2 à 0,51 % |
| CoO | 10 à 50 ppm |
| $Cr_2O_3$ | 10 à 300 ppm |
| CuO | 0 à 400 ppm |

le verre présentant un facteur rédox inférieur à 0,30, une longueur d'onde dominante $\lambda_D$ comprise entre 485 et 489 nm, une pureté d'excitation inférieure à 13 % et une sélectivité au moins égale à 1,1 sous une épaisseur variant entre 3 et 5 mm.

L'expression "silico-sodo-calcique" est ici utilisée dans le sens large et concerne toute composition de verre qui comprend les constituants suivants (en % en poids) :

| | |
|---|---|
| $SiO_2$ | 64 - 75 % |
| $Al_2O_3$ | 0 - 5 % |
| $B_2O_3$ | 0 - 5 % |
| CaO | 5 - 15 % |
| MgO | 0 - 5 % |
| $Na_2O$ | 10 - 18 % |
| $K_2O$ | 0 - 5 % |
| BaO | 0 - 5 % |

On convient ici que la composition de verre silico-sodo-calcique peut comprendre, outre les impuretés inévitables, une faible proportion (jusqu'à 1 %) d'autres constituants par exemple des agents aidant à la fusion ou à l'affinage du verre ($SO_3$, Cl, $Sb_2O_3$, $As_2O_3$) ou provenant d'un ajout éventuel de calcin recyclé dans le mélange vitrifiable.

Dans le contexte de l'invention, par "rédox" on entend le rapport de la teneur pondérale de l'oxyde ferreux exprimé sous forme de FeO à la teneur pondérale en fer total exprimé sous forme d'oxyde $Fe_2O_3$. Toujours dans ce même contexte, on définit la "sélectivité" comme étant le rapport de la transmission lumineuse sous illuminant A ($TL_A$) à la transmission énergétique totale ($T_E$) pour une épaisseur donnée.

La composition selon l'invention permet d'obtenir un verre coloré en bleu de pureté élevée même pour un niveau de transmission lumineuse important. En outre, le verre formé à partir de la composition selon l'invention présente une sélectivité élevée, ce qui est particulièrement avantageux lorsque celui-ci est destiné à former des vitrages pour le bâtiment ou l'automobile. En effet, avec un tel verre, on limite l'échauffement lié au rayonnement solaire et de ce fait on accroît le confort thermique des occupants du bâtiment ou de l'automobile. De préférence, la sélectivité du verre est égale ou supérieure à 1,3, et mieux encore est supérieure ou égale à 1,4.

La composition selon l'invention s'avère avantageuse pour former des verres qui, pour une épaisseur variant de 3 à 5 mm, possèdent une transmission lumineuse $TL_A$ au moins égale à 60 %, de préférence 70 %, et sont ainsi aptes à former des vitrages latéraux avant et des pare-brise de véhicules automobiles.

De préférence encore, le verre conforme à l'invention possède une pureté d'excitation inférieure à 9 %, et avantageusement supérieure à 4 %.

Avantageusement, la longueur d'onde dominante du verre obtenu grâce à la composition selon l'invention est au moins égale à 487 nm.

De préférence encore, la composition de verre conforme à l'invention comprend des teneurs en oxyde de chrome et en oxyde de cobalt qui satisfont la relation : 100 x $Cr_2O_3$ / $(CoO)^2$ > 7.

L'utilisation des agents colorants dans les limites de l'invention permet d'ajuster au mieux les propriétés optiques du verre et de conférer la coloration bleue recherchée.

Comme déjà dit précédemment, l'ajout d'oxyde de cobalt dans une composition contenant du fer donne au verre une coloration bleue mais entraîne aussi une diminution de la transmission lumineuse. Il est donc impératif de contrôler la teneur en oxyde de cobalt afin que la transmission lumineuse du verre reste compatible avec l'usage auquel on le destine. Dans la plupart des cas, la teneur en oxyde de cobalt varie de 15 à 40 ppm, de préférence de 20 à 35 ppm.

La présence de fer dans la composition de verre peut résulter des matières premières, en tant qu'impuretés, ou d'un ajout délibéré. Il est connu que si on augmente la teneur en fer, le verre prend une couleur verte et sa transmission lumineuse est réduite. Inversement, en réduisant la proportion de fer, en particulier sous forme d'ions ferreux, on dégrade les performances en terme de transmission énergétique sans affecter la transmission lumineuse. De manière préférée, la teneur en fer total dans la composition est supérieure à 0,30 %, mieux encore supérieure à 0,40 % et avantageusement supérieure à 0,45 %.

L'oxyde de chrome confère au verre une coloration vert/jaune et aussi réduit sa transmission lumineuse. L'ajout de chrome à une composition comprenant du cobalt atténue la coloration bleue vive et donc nuance l'intensité de la coloration, ce qui permet de conserver une longueur d'onde dominante peu élevée tout en ayant une pureté plus faible qu'avec le cobalt seul. Dans la présente invention, la teneur en oxyde de chrome est préférentiellement supérieure ou égale à 20 ppm, mieux encore inférieure ou égale à 250 ppm. De manière particulièrement avantageuse, la teneur en oxyde de chrome est comprise entre 30 à 80 ppm.

L'oxyde de cuivre donne au verre une coloration bleu-turquoise. Il absorbe les radiations infrarouges, et de ce fait contribue à diminuer la transmission énergétique globale $T_E$, sans modifier notablement la transmission lumineuse ce qui permet d'augmenter la sélectivité du verre. L'introduction d'oxyde de cuivre dans les conditions du procédé "float" reste néanmoins délicate car le cuivre a tendance à migrer à la surface du verre où, par réduction, il prend une coloration brune. Afin d'éviter l'apparition de cuivre réduit sous la forme de traînées brunes dans le ruban de verre, on limite la teneur en cuivre inférieure à 400 ppm, de préférence 250 ppm. De manière générale, il n'est pas nécessaire d'ajouter du cuivre.

En règle générale, les propriétés optiques et énergétiques d'un verre contenant plusieurs agents colorants sont difficilement prévisibles. Elles résultent d'une interaction complexe entre les différents agents colorants dont le comportement est directement lié à leur état d'oxydo-réduction induit par les autres éléments présents dans la composition.

Dans la présente invention, le choix des agents colorants et de leur teneur au sein de la composition est déterminant pour obtenir le verre bleu ayant les propriétés optiques et énergétiques recherchées.

La composition selon l'invention peut en outre comprendre des additifs, par exemple des agents modifiant les propriétés optiques dans certaines parties du spectre, notamment dans le domaine ultraviolet, tels que $CeO_2$, $TiO_2$, $WO_3$, $La_2O_3$, et $V_2O_5$, la teneur totale en ces additifs n'excédant pas 2 %, de préférence 1%.

Selon l'invention, le rédox du verre est maintenu à une valeur inférieure à 0,30, de préférence supérieure à 0,20 pour des raisons liées essentiellement à la fusion et à l'affinage du verre. Le rédox est généralement contrôlé à l'aide d'agents oxydants tels que le sulfate de sodium, et d'agents réducteurs tels que du coke dont les teneurs relatives sont correctement ajustées pour obtenir le rédox désiré.

Selon une réalisation particulièrement avantageuse de l'invention, et notamment pour des applications de type pare-brise et vitrages latéraux pour automobile, la transmission lumineuse globale sous illuminant A ($T_{LA}$) est supérieure ou égale à 70 % et la transmission énergétique est inférieure à 50 %, de préférence inférieure à 48 %, pour une épaisseur de 3,85 mm.

Une composition particulièrement adaptée à la production de verre relativement mince, d'épaisseur de l'ordre de 3,15 mm, comprend les agents colorants ci-après dans les limites pondérales suivants :

| | |
|---|---|
| $Fe_2O_3$ (fer total) | > 0,45 % |
| FeO | > 0,15 % |
| CoO | 10 à 50 ppm |
| $Cr_2O_3$ | 10 à 300 ppm |
| CuO | 0 à 400 ppm |

Ce verre mince peut être apparié avec un autre verre clair et l'ensemble peut ensuite être laminé pour former un verre feuilleté présentant une transmission lumineuse $TL_A$ supérieure à 70 % et une sélectivité supérieure à 1,3 utilisable en tant que pare-brise. De préférence, un tel verre présente une pureté d'excitation inférieure à 9 %.

Une autre composition particulièrement adaptée à la production de verres d'épaisseur de l'ordre de 3,85 mm, utiles pour former des vitrages automobiles, comprend les agents colorants ci-après dans les limites pondérales suivants :

| | |
|---|---|
| $Fe_2O_3$ (fer total) | > 0,4 %, de préférence > 0,45 % |
| FeO | > 0,12 %, de préférence > 0,15% |
| CoO | < 35 ppm |
| $Cr_2O_3$ | 10 à 300 ppm |
| CuO | 0 à 400 ppm |

Une telle composition permet d'obtenir un verre présentant une transmission lumineuse $TL_A$ supérieure à 60 % et une sélectivité supérieure à 1,3, de préférence une transmission lumineuse supérieure à 70 % et une sélectivité supérieure à 1,4.

Une autre composition particulièrement adaptée à la production de verres d'épaisseur de l'ordre de 4,85 mm, utiles pour former des vitrages pour des camions ou des autobus, comprend les agents colorants ci-après dans les limites pondérales suivants :

| | |
|---|---|
| $Fe_2O_3$ (fer total) | > 0,3 %, de préférence > 0,4 % |
| FeO | > 0,1 %, de préférence > 0,13 % |
| CoO | < 25 ppm |
| $Cr_2O_3$ | 10 à 300 ppm |
| CuO | 0 à 400 ppm |

Une telle composition permet d'obtenir un verre présentant une transmission lumineuse $TL_A$ supérieure à 60 % et une sélectivité supérieure à 1,3, de préférence supérieure à 1,4. De manière avantageuse, les verres présentent une longueur d'onde dominante au moins égale à 487 nm.

Dans les verres selon l'invention, la silice est généralement maintenue dans des limites très étroites pour les raisons suivantes : au-dessus d'environ 75 %, la viscosité du verre et son aptitude à la dévitrification augmentent fortement ce qui rend plus difficile sa fusion et sa coulée sur un bain d'étain fondu, et au-dessous de 64 %, la résistance hydrolytique du verre décroît rapidement et la transmission dans le visible diminue également.

Les oxydes alcalins $Na_2O$ et $K_2O$ facilitent la fusion du verre et permettent d'ajuster sa viscosité aux températures élevées afin de la maintenir proche de celle d'un verre standard. $K_2O$ peut être utilisé jusqu'à 5 % environ car au-delà se pose le problème du coût élevé de la composition. Par ailleurs, l'augmentation du pourcentage de $K_2O$ ne peut se faire, pour l'essentiel, qu'au détriment de $Na_2O$ ce qui contribue à augmenter la viscosité. La somme des teneurs en $Na_2O$ et $K_2O$, exprimées en pourcentages pondéraux, est de préférence égale ou supérieure à 10 %, et avantageusement inférieure à 20 %.

Les oxydes alcalino-terreux permettent d'adapter la viscosité du verre aux conditions d'élaboration du verre.

MgO joue un rôle important sur la viscosité et il peut être utilisé jusqu'à 5 % environ. La suppression totale de MgO, qui joue un rôle important sur la viscosité peut être compensée, au moins en partie, par une augmentation de la teneur en $Na_2O$ et/ou $SiO_2$. De manière avantageuse, la teneur en MgO est inférieure à 2 % ce qui a pour effet d'augmenter la capacité d'absorption dans l'infrarouge sans nuire à la transmission dans le visible.

BaO permet d'augmenter la transmission lumineuse et il peut être ajouté dans la composition selon l'invention dans une teneur inférieure à 5 %. BaO a une influence beaucoup plus faible que MgO et CaO sur la viscosité du verre et l'augmentation de sa teneur se fait essentiellement au détriment des oxydes alcalins, de MgO et surtout de CaO. Toute augmentation importante de BaO contribue donc à augmenter la viscosité du verre, notamment aux basses températures. De manière préférée, les verres selon l'invention sont exempts de BaO.

Outre le respect des limites définies précédemment pour la variation de la teneur de chaque oxyde alcalino-terreux, il est préférable pour obtenir les propriétés de transmission recherchées, de limiter la somme des pourcentages pondéraux de MgO, CaO et BaO à une valeur égale ou inférieure à 15 %.

La composition de verre conforme à l'invention est apte à être fondue dans les conditions de production du verre flotté. La fusion a généralement lieu dans des fours à flamme, éventuellement pourvus d'électrodes assurant le chauffage du verre dans la masse par passage d'un courant électrique entre les deux électrodes. Pour faciliter la fusion, et notamment rendre celle-ci mécaniquement intéressante, la composition de verre présente avantageusement une température correspondant à une viscosité $\eta$ telle que $\log\eta = 2$ qui est inférieure à 1500°C, de préférence une température correspondant à la viscosité $\eta$, exprimée en poise, telle que $\log\eta = 3,5$, (notée $T(\log\eta = 3,5)$) et une température au liquidus (notée $T_{liq}$) satisfaisant la relation :

$$T(\log\eta = 3,5) - T_{liq} > 20°C,$$

et de préférence la relation :

$$T(\log\eta = 3,5) - T_{liq} > 50°C,$$

Les exemples de compositions de verre données ci-après permettent de mieux apprécier les avantages de la présente invention.

Dans ces exemples, on indique les valeurs des propriétés suivantes mesurées sous une épaisseur donnée :

↪ le facteur de transmission lumineuse globale sous illuminant A ($TL_A$) entre 380 et 780 nm

↪ le facteur de transmission énergétique globale ($T_E$) intégrée entre 295 et 2500 nm selon la norme ISO 9050 (PARRY MOON Masse d'air 2)

↪ la sélectivité (SE), mesurée par le rapport de la transmission lumineuse totale pour l'illuminant A ($TL_A$) à la transmission énergétique totale ($T_E$)

↪ la longueur d'onde dominante ($\lambda d$) sous illuminant D65

↪ la pureté d'excitation ($P_{D65}$) sous illuminant D65

↪ le rédox.

Les calculs de la transmission lumineuse ($TL_A$), de la longueur d'onde dominante ($\lambda d$) et de la pureté (P) sont effectués en prenant l'observateur de référence colorimétrique CIE 1931 (Commission Internationale de l'Eclairage de 1931). Pour la détermination du rédox, la teneur en fer total ($Fe_2O_3$) est mesurée par fluorescence X et la teneur en fer ferreux (FeO) est mesurée par chimie utilisant la voie humide. Dans les exemples où la composition est théorique, le rédox est déterminé en utilisant un programme de simulation optique.

Chacune des compositions figurant dans le tableau 1 a été réalisée à partir de la matrice verrière suivante, dont les teneurs sont exprimées en pourcentages pondéraux, celle-ci étant corrigée au niveau de la silice pour s'adapter à la teneur totale en agents colorants ajoutés :

| | |
|---|---|
| $SiO_2$ | 71,00 % |
| $Al_2O_3$ | 0,70 % |
| CaO | 8,90 % |
| MgO | 3,80 % |
| $Na_2O$ | 14,10 % |
| $K_2O$ | 0,10 % |

Les verres des exemples 1, 11, 18 et 30 sont des exemples ne faisant pas partie de l'invention dont les compositions ont été mesurées alors que les verres des autres exemples sont donnés avec leurs compositions théoriques.

Ces différents exemples montrent que dans une large gamme d'agents colorants, les compositions selon l'invention permettent d'obtenir des verres bleus  satisfaisant les contraintes de transmission lumineuse globale ($T_{LA}$> 60 %) et présentant en outre une sélectivité au moins égale à 1,1 (tableaux 2 à 4).

Les exemples 5,7,8,15,16,19-21,23,25,27,28,34-36,38 réalisés selon l'invention montrent qu'il est possible d'obtenir des verres présentant la coloration bleue recherchée, c'est-à-dire une longueur d'onde comprise entre 485 et 489 nm et une pureté inférieure à 13 %, tout en offrant une transmission lumineuse élevée (supérieure à 60 %) et une sélectivité au moins égale à 1,1. Ces bonnes propriétés des verres résultent de l'association des agents colorants sous la forme d'oxydes de fer, de cobalt, de nickel, et le cas échéant de cuivre. Les exemples montrent également que les propriétés optiques visées peuvent être atteintes avec une teneur en fer relativement faible (inférieure ou égale à 0,51 %), ce qui est particulièrement avantageux lorsqu'il s'agit de mettre en oeuvre la composition dans des installations de production de verre "clair" procédant selon le procédé "float".

Les verres obtenus à partir des compositions selon l'invention sont compatibles avec les techniques habituelles de fabrication du verre plat. L'épaisseur du ruban de verre obtenu par nappage du verre en fusion sur un bain d'étain peut varier entre 0,8 et 10 mm, de préférence entre 3 et 5 mm, pour les vitrages automobiles et entre 5 et 10 mm pour les vitrages destinés au bâtiment.

Le vitrage obtenu par la découpe du ruban de verre peut subir ultérieurement une opération de bombage, notamment lorsqu'il s'agit d'un vitrage automobile. Il peut également subir d'autres opérations de traitement ultérieures, par exemple visant à le revêtir d'une ou plusieurs couches d'oxydes métalliques en vue de réduire son échauffement par le rayonnement solaire et par voie de conséquence de réduire celui de l'habitacle d'un véhicule qui en est pourvu.

## TABLEAU 1

| | 1 * | 2 * | 3 * | 4 * | 5 | 6 * | 7 | 8 | 9 * | 10 * | 11 * | 12 * | 13 * | 14 * | 15 |
|---|---|---|---|---|---|---|---|---|---|---|---|---|---|---|---|
| $Fe_2O_3$ (%) | 0,51 | 0,51 | 0,51 | 0,51 | 0,50 | 0,40 | 0,50 | 0,50 | 0,50 | 0,50 | 0,40 | 0,40 | 0,40 | 0,40 | 0,40 |
| FeO (%) | 0,175 | 0,175 | 0,175 | 0,175 | 0,13 | 0,13 | 0,13 | 0,12 | 0,15 | 0,16 | 0,12 | 0,12 | 0,13 | 0,13 | 0,10 |
| Rédox | 0,34 | 0,34 | 0,34 | 0,34 | 0,26 | 0,33 | 0,26 | 0,24 | 0,30 | 0,32 | 0,30 | 0,30 | 0,33 | 0,33 | 0,25 |
| CoO (ppm) | 23 | 35 | 38 | 31 | 31 | 15 | 43 | 50 | 25 | 13 | 38 | 43 | 24 | 28 | 20 |
| $Cr_2O_3$ (ppm) | 40 | 80 | 40 | 130 | 50 | 70 | 100 | 40 | 70 | 20 | 200 | 120 | 140 | 70 | 80 |
| CuO (ppm) | 0 | 0 | 0 | 0 | 0 | 0 | 0 | 0 | 0 | 0 | 0 | 0 | 0 | 0 | 0 |

| | 16 | 17 * | 18 * | 19 | 20 | 21 | 22 * | 23 | 24 * | 25 | 26 * | 27 | 28 | 29 * | 30 * |
|---|---|---|---|---|---|---|---|---|---|---|---|---|---|---|---|
| $Fe_2O_3$ (%) | 0,45 | 0,45 | 0,45 | 0,41 | 0,41 | 0,41 | 0,41 | 0,41 | 0,36 | 0,35 | 0,35 | 0,31 | 0,31 | 0,31 | 0,24 |
| FeO (%) | 0,10 | 0,15 | 0,14 | 0,12 | 0,10 | 0,10 | 0,14 | 0,12 | 0,12 | 0,10 | 0,11 | 0,09 | 0,09 | 0,105 | 0,08 |
| Rédox | 0,22 | 0,33 | 0,31 | 0,29 | 0,24 | 0,24 | 0,34 | 0,29 | 0,33 | 0,29 | 0,31 | 0,29 | 0,29 | 0,34 | 0,33 |
| CoO (ppm) | 21 | 36 | 22 | 28 | 22 | 41 | 38 | 38 | 26 | 22 | 39 | 32 | 24 | 40 | 24 |
| $Cr_2O_3$ (ppm) | 50 | 120 | 120 | 105 | 40 | 140 | 140 | 175 | 150 | 60 | 210 | 160 | 73 | 225 | 115 |
| CuO (ppm) | 0 | 0 | 0 | 0 | 0 | 0 | 0 | 0 | 0 | 0 | 0 | 0 | 0 | 0 | 0 |

| | 31 * | 32 * | 33 * | 34 | 35 | 36 | 37 * | 38 | 39 * | 40 * | 41 * | 42 * |
|---|---|---|---|---|---|---|---|---|---|---|---|---|
| $Fe_2O_3$ (%) | 0,24 | 0,24 | 0,51 | 0,50 | 0,45 | 0,41 | 0,41 | 0,41 | 0,36 | 0,38 | 0,35 | 0,26 |
| FeO (%) | 0,082 | 0,081 | 0,175 | 0,13 | 0,10 | 0,12 | 0,14 | 0,115 | 0,123 | 0,13 | 0,11 | 0,08 |
| Rédox | 0,34 | 0,34 | 0,34 | 0,26 | 0,22 | 0,29 | 0,34 | 0,28 | 0,34 | 0,34 | 0,31 | 0,31 |
| CoO (ppm) | 38 | 45 | 18 | 37 | 15 | 26 | 32 | 15 | 21 | 38 | 32 | 30 |
| $Cr_2O_3$ (ppm) | 125 | 145 | 40 | 95 | 50 | 105 | 140 | 60 | 130 | 80 | 190 | 130 |
| CuO (ppm) | 0 | 0 | 170 | 240 | 230 | 80 | 225 | 120 | 215 | 245 | 350 | 280 |

\* : exemples ne faisant pas partie de l'invention

## TABLEAU 2

|  | 1* | 2* | 3* | 4* | 5 | 6* | 7 | 8 | 9* | 10* | 11* | 12* | 13* | 14* | 15 |
|---|---|---|---|---|---|---|---|---|---|---|---|---|---|---|---|
| **3,85 mm** | | | | | | | | | | | | | | | |
| $T_{LA}$ (%) | 70,8 | 67,2 | 67,2 | 67,2 | 71,0 | 74,7 | 67,1 | 67,1 | 71,1 | 74,6 | 66,9 | 67,2 | 71,0 | 71,3 | 74,7 |
| $T_E$ (%) | 49,4 | 47,8 | 48,1 | 47,5 | 54,4 | 56,1 | 52,7 | 54,5 | 51,9 | 52,4 | 53,7 | 54,4 | 54,3 | 54,9 | 60,3 |
| SE | 1,43 | 1,41 | 1,40 | 1,41 | 1,31 | 1,33 | 1,27 | 1,23 | 1,37 | 1,42 | 1,25 | 1,24 | 1,31 | 1,30 | 1,24 |
| $\lambda d$ (nm) | 488 | 487 | 486 | 489 | 489 | 488 | 488 | 486 | 489 | 489 | 489 | 486 | 489 | 486 | 489 |
| $P_{D65}$ (%) | 7,3 | 8,5 | 9,3 | 7,8 | 6,0 | 5,5 | 7,3 | 8,1 | 6,1 | 5,4 | 7,1 | 8,4 | 6,2 | 7,3 | 4,7 |
| **3,15mm** | | | | | | | | | | | | | | | |
| $T_{LA}$ (%) | 74,2 | 71,0 | 71,0 | 71,1 | 74,4 | 77,5 | 71,0 | 71,0 | 74,4 | 77,5 | 70,9 | 71,1 | 74,3 | 74,6 | 77,6 |
| $T_E$ (%) | 54,4 | 53,1 | 53,4 | 52,8 | 59,4 | 60,8 | 57,9 | 59,5 | 57,0 | 57,3 | 58,9 | 59,5 | 59,2 | 59,8 | 64,8 |
| SE | 1,36 | 1,34 | 1,33 | 1,35 | 1,25 | 1,27 | 1,23 | 1,19 | 1,31 | 1,35 | 1,20 | 1,19 | 1,26 | 1,25 | 1,20 |
| $\lambda d$ (nm) | 488 | 487 | 486 | 489 | 489 | 488 | 488 | 486 | 489 | 489 | 489 | 486 | 489 | 486 | 489 |
| $P_{D65}$ (%) | 6,0 | 7,1 | 7,7 | 6,4 | 5,0 | 4,6 | 6,1 | 6,7 | 5,1 | 4,5 | 5,9 | 6,9 | 5,1 | 6,1 | 3,8 |
| **4,85mm** | | | | | | | | | | | | | | | |
| $T_{LA}$ (%) | 66,3 | 62,0 | 62,0 | 62,1 | 66,5 ' | 70,8 | 62,0 | 61,9 | 66,6 | 70,8 | 61,8 | 62,0 | 66,5 | 66,8 | 70,9 |
| $T_E$ (%) | 43,3 | 41,6 | 41,9 | 41,2 | 48,3 | 50,2 | 46,4 | 48,2 | 45,8 | 46,5 | 47,3 | 48,1 | 48,1 | 48,9 | 54,6 |
| SE | 1,53 | 1,49 | 1,48 | 1,51 | 1,38 | 1,41 | 1,34 | 1,28 | 1,45 | 1,52 | 1,31 | 1,29 | 1,38 | 1,37 | 1,30 |
| $\lambda d$ (nm) | 487 | 487 | 485 | 489 | 488 | 488 | 488 | 485 | 489 | 489 | 489 | 486 | 489 | 486 | 489 |
| $P_{D65}$ (%) | 9,0 | 10,6 | 11,5 | 9,5 | 7,5 | 7,0 | 9,0 | 10,1 | 7,6 | 6,7 | 8,8 | 10,5 | 7,7 | 9,1 | 5,8 |

TABLEAU 3

| | 16 | 17* | 18* | 19 | 20 | 21 | 22* | 23 | 24* | 25 | 26* | 27 | 28 | 29* | 30* |
|---|---|---|---|---|---|---|---|---|---|---|---|---|---|---|---|
| **3,85 mm** | | | | | | | | | | | | | | | |
| $T_{LA}$(%) | 74,8 | 67,2 | 71,1 | 71,1 | 75,0 | 67,3 | 67,0 | 67,3 | 71,0 | 74,9 | 67,3 | 71,1 | 74,9 | 67,2 | 74,9 |
| $T_E$(%) | 60,3 | 50,5 | 53,0 | 55,8 | 60,6 | 56,8 | 51,6 | 54,0 | 55,7 | 60,7 | 55,4 | 60,3 | 62,4 | 56,1 | 64,1 |
| SE | 1,24 | 1,33 | 1,34 | 1,27 | 1,24 | 1,18 | 1,30 | 1,25 | 1,27 | 1,23 | 1,21 | 1,18 | 1,20 | 1,20 | 1,17 |
| λd (nm) | 488 | 487 | 489 | 488 | 487 | 489 | 487 | 489 | 489 | 487 | 489 | 489 | 487 | 489 | 488 |
| $P_{D65}$(%) | 4,7 | 8,6 | 6,3 | 6,4 | 5,2 | 6,6 | 8,5 | 7,2 | 6,1 | 5,4 | 7,0 | 5,7 | 5,3 | 7,0 | 4,9 |
| **3,15mm** | | | | | | | | | | | | | | | |
| $T_{LA}$(%) | 77,6 | 71,0 | 74,4 | 74,4 | 77,8 | 71,2 | 70,9 | 71,2 | 74,4 | 77,7 | 71,1 | 74,4 | 77,7 | 71,1 | 77,7 |
| $T_E$(%) | 64,8 | 55,7 | 58,0 | 60,7 | 65,1 | 61,7 | 56,8 | 59,1 | 60,6 | 65,1 | 60,4 | 64,9 | 66,6 | 61,1 | 68,2 |
| SE | 1,20 | 1,27 | 1,28 | 1,23 | 1,20 | 1,15 | 1,25 | 1,20 | 1,23 | 1,19 | 1,18 | 1,15 | 1,17 | 1,16 | 1,14 |
| λd (nm) | 488 | 487 | 489 | 488 | 487 | 489 | 487 | 489 | 489 | 487 | 489 | 489 | 487 | 489 | 488 |
| $P_{D65}$(%) | 4,7 | 7,1 | 5,2 | 5,3 | 4,3 | 5,4 | 7,0 | 6,0 | 5,1 | 4,4 | 5,8 | 4,7 | 4,4 | 5,8 | 4,1 |
| **4,85mm** | | | | | | | | | | | | | | | |
| $T_{LA}$(%) | 71,0 | 62,0 | 66,6 | 66,6 | 71,2 | 62,2 | 61,8 | 62,2 | 66,5 | 71,1 | 62,1 | 66,6 | 71,0 | 62,0 | 71,1 |
| $T_E$(%) | 54,7 | 44,2 | 46,9 | 49,8 | 55,0 | 50,5 | 45,3 | 47,7 | 49,6 | 55,1 | 49,1 | 54,5 | 56,8 | 49,8 | 58,7 |
| SE | 1,30 | 1,40 | 1,42 | 1,34 | 1,29 | 1,23 | 1,36 | 1,30 | 1,34 | 1,29 | 1,26 | 1,22 | 1,25 | 1,24 | 1,21 |
| λd(nm) | 488 | 486 | 489 | 488 | 487 | 489 | 487 | 489 | 489 | 487 | 489 | 489 | 487 | 489 | 488 |
| $P_{D65}$(%) | 5,9 | 10,9 | 7,8 | 8,0 | 6,5 | 8,2 | 10,5 | 9,0 | 7,6 | 6,7 | 8,7 | 7,1 | 6,7 | 8,7 | 6,2 |

**TABLEAU 4**

| | 31* | 32* | 33* | 34 | 35 | 36 | 37* | 38 | 39* | 40* | 41* | 42* |
|---|---|---|---|---|---|---|---|---|---|---|---|---|
| **3,85 mm** | | | | | | | | | | | | |
| $T_{LA}$(%) | 71,0 | 67,1 | 71,0 | 67,2 | 74,8 | 71,1 | 67,1 | 74,8 | 71,1 | 67,2 | 67,1 | 71,1 |
| $T_E$(%) | 62,2 | 60,1 | 48,7 | 51,5 | 58,9 | 55,4 | 50,5 | 57,5 | 54,3 | 52,2 | 53,5 | 60,6 |
| SE | 1,14 | 1,12 | 1,46 | 1,30 | 1,27 | 1,28 | 1,33 | 1,30 | 1,31 | 1,29 | 1,25 | 1,17 |
| $\lambda d$(nm) | 486 | 489 | 488 | 489 | 489 | 488 | 487 | 488 | 489 | 485 | 489 | 488 |
| $P_{D65}$ (%) | 6,9 | 6,8 | 7,6 | 7,8 | 5,3 | 6,6 | 8,9 | 5,5 | 7,0 | 10,1 | 8,2 | 7,1 |
| **3,15mm** | | | | | | | | | | | | |
| $T_{LA}$(%) | 74,4 | 71,0 | 74,3 | 71,1 | 77,6 | 74,4 | 71,0 | 77,6 | 74,4 | 71,1 | 71,0 | 74,4 |
| $T_E$(%) | 66,6 | 64,8 | 53,8 | 56,8 | 63,5 | 60,3 | 55,8 | 62,1 | 59,3 | 57,4 | 58,7 | 65,1 |
| SE | 1,12 | 1,10 | 1,38 | 1,25 | 1,22 | 1,23 | 1,27 | 1,25 | 1,25 | 1,24 | 1,21 | 1,14 |
| $\lambda d$ (nm) | 486 | 489 | 488 | 489 | 489 | 488 | 487 | 489 | 489 | 485 | 489 | 488 |
| $P_{D65}$(%) | 5,6 | 5,6 | 6,3 | 6,5 | 4,3 | 5,5 | 7,4 | 4,5 | 5,8 | 8,3 | 6,8 | 5,9 |
| **4,85mm** | | | | | | | | | | | | |
| $T_{LA}$(%) | 66,5 | 62,0 | 66,5 | 62,1 | 71,0 | 66,6 | 61,9 | 71,0 | 66,6 | 62,1 | 62,0 | 66,6 |
| $T_E$(%) | 56,8 | 54,1 | 42,7 | 45,1 | 53,1 | 49,3 | 44,2 | 51,7 | 48,2 | 45,9 | 47,1 | 54,7 |
| SE | 1,17 | 1,15 | 1,56 | 1,38 | 1,34 | 1,35 | 1,40 | 1,37 | 1,38 | 1,35 | 1,32 | 1,22 |
| $\lambda d$ (nm) | 486 | 489 | 488 | 489 | 489 | 488 | 487 | 488 | 489 | 485 | 489 | 488 |
| $P_{D65}$(%) | 8,6 | 8,4 | 9,4 | 9,7 | 6,6 | 8,3 | 11,1 | 6,9 | 8,7 | 12,6 | 10,1 | 8,9 |

## Revendications

**1.** Composition de verre bleu comprenant les constituants suivants (en % en poids) :

| | |
|---|---|
| $SiO_2$ | 64 - 75 % |
| $Al_2O_3$ | 0 - 5 % |
| $B_2O_3$ | 0 - 5 % |
| CaO | 5 - 15 % |
| MgO | 0 - 5 % |
| $Na_2O$ | 10 - 18 % |
| $K_2O$ | 0 - 5 % |
| BaO | 0 - 5 % |

*caractérisée en ce qu*'elle comprend les agents colorants ci-après dans une teneur variant dans les limites pondérales suivantes :

| | |
|---|---|
| $Fe_2O_3$ (fer total) | 0,2 à 0,51 % |
| CoO | 10 à 50 ppm |
| $Cr_2O_3$ | 10 à 300 ppm |
| CuO | 0-400 ppm |

le verre présentant un facteur rédox inférieure à 0,30, une longueur d'onde dominante $\lambda_D$ comprise entre 485 et 489 nm, une pureté d'excitation inférieure à 13 % et une sélectivité au moins égale à 1,1 sous une épaisseur comprise entre 3 et 5 mm.

**2.** Composition de verre selon la revendication 1, *caractérisée en ce que* la teneur en fer est supérieure à 0,3 %, de préférence supérieure à 0,40 % et mieux encore supérieure à 0,45 %.

**3.** Composition de verre selon la revendication 1, *caractérisée en ce que* la teneur en CoO varie de 15 et 40 ppm et de préférence de 20 à 35 ppm.

**4.** Composition de verre selon la revendication 1, *caractérisée en ce que* la teneur en $Cr_2O_3$ est supérieure ou égale à 20 ppm, et mieux encore inférieure ou égale à 250 ppm.

**5.** Composition de verre selon la revendication 4, *caractérisée en ce que* la teneur en $Cr_2O_3$ est comprise entre 30 et 80 ppm.

**6.** Composition de verre selon l'une des revendications 1 à 5, *caractérisée* **en ce que** la teneur en CuO est inférieure à 250 ppm.

**7.** Composition de verre selon l'une des revendications 1 à 6, *caractérisée* **en ce qu'***elle* présente une sélectivité au moins égale à 1,3, et de préférence au moins égale à 1,4.

**8.** Composition de verre selon l'une des revendications 1 à 7, *caractérisée* **en ce qu'***elle* présente une transmission lumineuse $TL_A$ au moins égale à 60 %, et de préférence au moins égale à 70 %.

**9.** Composition de verre selon l'une des revendications 1 à 8, *caractérisée en ce que* les teneurs en $Cr_2O_3$ et en CoO satisfont la relation : $100 \times Cr_2O_3 / (CoO)^2 > 7$.

**10.** Composition de verre selon l'une des revendications 1 à 9, *caractérisée en* **ce qu'**elle présente un rédox supérieur à 0,20.

**11.** Composition de verre selon l'une des revendications 1 à 10, *caractérisée en* **ce qu'**elle présente une pureté d'excitation inférieure à 9 %, et de préférence supérieure à 4%.

**12.** Composition de verre selon l'une des revendications 1 à 11, *caractérisée en ce* **qu'**elle présente une longueur d'onde dominante au moins égale à 487 nm.

**13.** Composition de verre selon l'une des revendications 1 à 12, **caractérisée** *en ce* **qu'**elle comprend en outre des agents modifiant les propriétés optiques dans certaines parties du spectre, notamment dans le domaine ultraviolet, tels que $CeO_2$, $TiO_2$, $WO_3$, $La_2O_3$, et $V_2O_5$.

**14.** Composition de verre selon la revendication 13, *caractérisée en ce que* la teneur en agents n'excède pas 2 %, de préférence 1 %.

**15.** Composition de verre selon l'une des revendications 1 à 14, *caractérisée en ce* **qu'**elle comprend

| | |
|---|---|
| $Fe_2O_3$ (fer total) | > 0,45 % |
| FeO | > 0,15 % |
| CoO | 10 à 50 ppm |
| $Cr_2O_3$ | 10 à 300 ppm |
| CuO | 0 à 400 ppm |

le verre présentant une transmission lumineuse $TL_A$ supérieure à 70 % et une sélectivité supérieure à 1,3 sous une épaisseur de l'ordre de 3,15 mm.

**16.** Composition de verre selon la revendication 15, *caractérisée en ce qu'*elle présente une pureté d'excitation inférieure à 9 %.

**17.** Composition de verre selon l'une des revendications 1 à 14, *caractérisée en* **ce qu'**elle comprend

| Fe$_2$O$_3$ (fer total) | > 0,4 %, de préférence > 0,45 % |
|---|---|
| FeO | > 0,12 %, de préférence > 0,15 % |
| CoO | < 35 ppm |
| Cr$_2$O$_3$ | 10 à 300 ppm |
| CuO | 0 à 400 ppm |

le verre présentant une transmission lumineuse TL$_A$ supérieure à 60 % et une sélectivité supérieure à 1,3 sous une épaisseur de l'ordre de 3,85 mm.

**18.** Composition de verre selon la revendication 17, *caractérisée en ce qu'*elle présente une transmission lumineuse supérieure à 70 % et une sélectivité supérieure à 1,4.

**19.** Composition de verre selon l'une des revendications 1 à 14, *caractérisée en ce qu'*elle comprend

| Fe$_2$O$_3$ (fer total) | > 0,3 %, de préférence > 0,4 % |
|---|---|
| FeO | > 0,1 %, de préférence > 0,13 % |
| CoO | < 25 ppm |
| Cr$_2$O$_3$ | 10 à 300 ppm |
| CuO | 0 à 400 ppm |

le verre présentant une transmission lumineuse TL$_A$ supérieure à 60 % et une sélectivité supérieure à 1,3, de préférence supérieure à 1,4 sous une épaisseur de l'ordre de 4,85 mm.

**20.** Composition de verre selon la revendication 19, *caractérisée* en ce qu'elle présente une longueur d'onde dominante au moins égale à 487 nm.

**21.** Feuille de verre formée par flottage sur un bain de métal fondu, de composition chimique telle que définie par l'une quelconque des revendications 1 à 20.

**22.** Vitrage, notamment automobile, *caractérisé* en ce *qu'*il comprend au moins une feuille de verre selon la revendication 21.

**Patentansprüche**

**1.** Blauglaszusammensetzung, welche die folgenden Bestandteile (in Gew.-%) umfasst:

| SiO$_2$ | 64 - 75 % |
|---|---|
| Al$_2$O$_3$ | 0 - 5 % |
| B$_2$O$_3$ | 0 - 5 % |
| CaO | 5-15% |
| MgO | 0-5 % |
| Na$_2$O | 10 - 18 % |
| K$_2$O | 0 - 5 % |
| BaO | 0-5 % |

**dadurch gekennzeichnet, dass** sie die nachstehenden Farbstoffe in einem innerhalb der folgenden Gewichtsgrenzen variierenden Gehalt umfasst:

| Fe$_2$O$_3$ (Gesamteisen) | 0,2 bis 0,51 % |
|---|---|
| CoO | 10 bis 50 ppm |
| Cr$_2$O$_3$ | 10 bis 300 ppm |
| CuO | 0 bis 400 ppm |

wobei das Glas einen Redoxfaktor kleiner als 0,30, eine maßgebende Wellenlänge $\lambda_D$ zwischen 485 und 489 nm, einen spektralen Farbanteil von weniger als 13 % und eine Selektivität von wenigstens gleich 1,1 unter einer Dicke zwischen 3 und 5 mm aufweist.

2. Glaszusammensetzung nach Anspruch 1, **dadurch gekennzeichnet, dass** der Eisengehalt mehr als 0,3 %, vorzugsweise mehr als 0,40 % und, besser noch, mehr als 0,45 % beträgt.

3. Glaszusammensetzung nach Anspruch 1, **dadurch gekennzeichnet, dass** der CoO-Gehalt von 15 bis 40 ppm und vorzugsweise von 20 bis 35 ppm variiert.

4. Glaszusammensetzung nach Anspruch 1, **dadurch gekennzeichnet, dass** der $Cr_2O_3$-Gehalt mehr als oder gleich 20 ppm und, besser noch, weniger als oder gleich 250 ppm beträgt.

5. Glaszusammensetzung nach Anspruch 4, **dadurch gekennzeichnet, dass** der $Cr_2O_3$-Gehalt im Bereich zwischen 30 und 80 ppm liegt.

6. Glaszusammensetzung nach einem der Ansprüche 1 bis 5, **dadurch gekennzeichnet, dass** der CuO-Gehalt weniger als 250 ppm beträgt.

7. Glaszusammensetzung nach einem der Ansprüche 1 bis 6, **dadurch gekennzeichnet, dass** sie eine Selektivität von wenigstens gleich 1,3 und vorzugsweise wenigstens gleich 1,4 aufweist.

8. Glaszusammensetzung nach einem der Ansprüche 1 bis 7, **dadurch gekennzeichnet, dass** sie eine Lichtdurchlässigkeit $TL_A$ von wenigstens gleich 60 % und vorzugsweise wenigstens gleich 70 % aufweist.

9. Glaszusammensetzung nach einem der Ansprüche 1 bis 8, **dadurch gekennzeichnet, dass** die $Cr_2O_3$- und CoO-Gehalte die Beziehung $100 \times Cr_2O_3 / (CoO)^2 > 7$ erfüllen.

10. Glaszusammensetzung nach einem der Ansprüche 1 bis 9, **dadurch gekennzeichnet, dass** sie einen Redox von über 0,20 aufweist.

11. Glaszusammensetzung nach einem der Ansprüche 1 bis 10, **dadurch gekennzeichnet, dass** sie einen spektralen Farbanteil von weniger als 9 % und vorzugsweise von mehr als 4 % aufweist.

12. Glaszusammensetzung nach einem der Ansprüche 1 bis 11, **dadurch gekennzeichnet, dass** sie eine maßgebende Wellenlänge von wenigstens gleich 487 nm aufweist.

13. Glaszusammensetzung nach einem der Ansprüche 1 bis 12, **dadurch gekennzeichnet, dass** sie ferner Mittel umfasst, welche die optischen Eigenschaften in einigen Teilen des Spektrums, insbesondere im ultravioletten Bereich, verändern, wie $CeO_2$, $TiO_2$, $WO_3$, $La_2O_3$ und $V_2O_5$.

14. Glaszusammensetzung nach Anspruch 13, **dadurch gekennzeichnet, dass** der Gehalt an Mitteln 2 %, vorzugsweise 1 % nicht überschreitet.

15. Glaszusammensetzung nach einem der Ansprüche 1 bis 14, **dadurch gekennzeichnet, dass** sie umfasst

| | |
|---|---|
| $Fe_2O_3$ (Gesamteisen) | > 0,45 % |
| FeO | > 0,15 % |
| CoO | 10 bis 50 ppm |
| $Cr_2O_3$ | 10 bis 300 ppm |
| CuO | 0 bis 400 ppm |

wobei das Glas eine Lichtdurchlässigkeit $TL_A$ von über 70 % und eine Selektivität von über 1,3 unter einer Dicke in der Größenordnung von 3,15 mm aufweist.

16. Glaszusammensetzung nach Anspruch 15, **dadurch gekennzeichnet, dass** sie einen spektralen Farbanteil von weniger als 9 % aufweist.

**17.** Glaszusammensetzung nach einem der Ansprüche 1 bis 14, **dadurch gekennzeichnet, dass** sie umfasst

| | |
|---|---|
| $Fe_2O_3$ (Gesamteisen) | > 0,4 %, vorzugsweise > 0,45 % |
| FeO | > 0,12 %, vorzugsweise > 0,15 % |
| CoO | < 35 ppm |
| $Cr_2O_3$ | 10 bis 300 ppm |
| CuO | 0 bis 400 ppm |

wobei das Glas eine Lichtdurchlässigkeit $TL_A$ von über 60 % und eine Selektivität von über 1,3 unter einer Dicke in der Größenordnung von 3,85 mm aufweist.

**18.** Glaszusammensetzung nach Anspruch 17, **dadurch gekennzeichnet, dass** sie eine Lichtdurchlässigkeit von über 70 % und eine Selektivität von über 1,4 aufweist.

**19.** Glaszusammensetzung nach einem der Ansprüche 1 bis 14, **dadurch gekennzeichnet, dass** sie umfasst

| | |
|---|---|
| $Fe_2O_3$ (Gesamteisen) | > 0,3 %, vorzugsweise > 0,4 % |
| FeO | > 0,1 %, vorzugsweise > 0,13 % |
| CoO | < 25 ppm |
| $Cr_2O_3$ | 10 bis 300 ppm |
| CuO | 0 bis 400 ppm |

wobei das Glas eine Lichtdurchlässigkeit $TL_A$ von über 60 % und eine Selektivität von über 1,3, vorzugsweise über 1,4, unter einer Dicke in der Größenordnung von 4,85 mm aufweist.

**20.** Glaszusammensetzung nach Anspruch 19, **dadurch gekennzeichnet, dass** sie eine maßgebende Wellenlänge von wenigstens gleich 487 nm aufweist.

**21.** Glasscheibe, die durch Floaten auf einem Bad aus geschmolzenem Metall gebildet ist, mit einer chemischen Zusammensetzung wie sie durch einen der Ansprüche 1 bis 20 definiert ist.

**22.** Verglasung, insbesondere für ein Kraftfahrzeug, **dadurch gekennzeichnet, dass** sie wenigstens eine Glasscheibe nach Anspruch 21 umfasst.

**Claims**

**1.** A blue glass composition comprising the following constituents (as % by weight):

| | |
|---|---|
| $SiO_2$ | 64 - 75% |
| $Al_2O_3$ | 0 - 5% |
| $B_2O_3$ | 0 - 5% |
| CaO | 5 - 15% |
| MgO | 0 - 5% |
| $Na_2O$ | 10 - 18% |
| $K_2O$ | 0 - 5% |
| BaO | 0 - 5% |

**characterized in that** it comprises the coloring agents below in a content varying within the following limits, by weight:

| | |
|---|---|
| $Fe_2O_3$ (total iron) | 0.2 to 0.51 % |
| CoO | 10 to 50 ppm |
| $Cr_2O_3$ | 10 to 300 ppm |
| CuO | 0 to 400 ppm |

the glass exhibiting a redox factor of less than 0.30, a dominant wavelength $\lambda_D$ of between 485 and 489 nm, an excitation purity of less than 13% and a selectivity at least equal to 1.1 under a thickness of between 3 and 5 mm.

2. The glass composition as claimed in claim 1, *characterized in that* the iron content is greater than 0.3%, preferably greater than 0.40% and even better still greater than 0.45%.

3. The glass composition as claimed in claim 1, *characterized in that* the CoO content varies from 15 and 40 ppm and preferably from 20 to 35 ppm.

4. The glass composition as claimed in claim 1, *characterized in that* the $Cr_2O_3$ content is greater than or equal to 20 ppm and even better still less than or equal to 250 ppm.

5. The glass composition as claimed in claim 4, *characterized in that* the $Cr_2O_3$ content is between 30 and 80 ppm.

6. The glass composition as claimed in one of claims 1 to 5, *characterized in that* the CuO content is less than 250 ppm.

7. The glass composition as claimed in one of claims 1 to 6, *characterized in that* it exhibits a selectivity at least equal to 1.3 and preferably at least equal to 1.4.

8. The glass composition as claimed in one of claims 1 to 7, *characterized in that* it exhibits a light transmission $LT_A$ at least equal to 60% and preferably at least equal to 70%.

9. The glass composition as claimed in one of claims 1 to 8, *characterized in that* the contents of $Cr_2O_3$ and of CoO satisfy the relationship: $100 \times Cr_2O_3 / (CoO)^2 > 7$.

10. The glass composition as claimed in one of claims 1 to 9, *characterized in that* it exhibits a redox of greater than 0,20.

11. The glass composition as claimed in one of claims 1 to 10, *characterized in that* it exhibits an excitation purity of less than 9% and preferably of greater than 4%.

12. The glass composition as claimed in one of claims 1 to 11, *characterized in that* it exhibits a dominant wavelength at least equal to 487 nm.

13. The glass composition as claimed in one of claims 1 to 12, *characterized in that* it additionally comprises agents which modify the optical properties in certain parts of the spectrum, in particular in the ultraviolet region, such as $CeO_2$, $TiO_2$, $WO_3$, $La_2O_3$ and $V_2O_5$.

14. The glass composition as claimed in claim 13, *characterized in that* the content of agents does not exceed 2%, preferably 1 %.

15. The glass composition as claimed in one of claims 1 to 14, *characterized in that* it comprises:

| | |
|---|---|
| $Fe_2O_3$ (total iron) | > 0.45% |
| FeO | > 0.15% |
| CoO | 10 to 50 ppm |
| $Cr_2O_3$ | 10 to 300 ppm |
| CuO | 0 to 400 ppm |

the glass exhibiting a light transmission $LT_A$ of greater than 70% and a selectivity of greater than 1,3 under a thickness of the order of 3,15 mm.

16. The glass composition as claimed in claim 15, *characterized in that* it exhibits an excitation purity of less than 9%.

17. The glass composition as claimed in one of claims 1 to 14, *characterized in that* it comprises:

| | |
|---|---|
| $Fe_2O_3$ (total iron) | > 0.4%, preferably > 0.45% |

(continued)

| | |
|---|---|
| FeO | > 0.12%, preferably > 0.15% |
| CoO | < 35 ppm |
| $Cr_2O_3$ | 10 to 300 ppm |
| CuO | 0 to 400 ppm |

the glass exhibiting a light transmission $LT_A$ of greater than 60% and a selectivity of greater than 1.3 under a thickness of the order of 3.85 mm.

18. The glass composition as claimed in claim 17, ***characterized in that*** it exhibits a light transmission of greater than 70% and a selectivity of greater than 1.4.

19. The glass composition as claimed in one of claims 1 to 14, ***characterized in that*** it comprises:

| | |
|---|---|
| $Fe_2O_3$ (total iron) | > 0.3%, preferably > 0.4% |
| FeO | > 0.1 %, preferably > 0.13% |
| CoO | < 25 ppm |
| $Cr_2O_3$ | 10 to 300 ppm |
| CuO | 0 to 400 ppm |

the glass exhibiting a light transmission $LT_A$ of greater than 60% and a selectivity of greater than 1.3, preferably of greater than 1.4, under a thickness of the order of 4.85 mm.

20. The glass composition as claimed in claim 19, ***characterized in that*** it exhibits a dominant wavelength at least equal to 487 nm.

21. A glass sheet formed by floating on a bath of molten metal, with a chemical composition as defined by any one of claims 1 to 20.

22. A window, in particular an automobile window, ***characterized in that*** it comprises at least one glass sheet as claimed in claim 21.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0820964 A
- EP 0814064 A
- EP 1023245 A
- WO 02070249 A
- WO 0174729 A